# EUROPÄISCHE PATENTSCHRIFT

(11) **EP 3 134 656 B1**
(45) Veröffentlichungstag und Bekanntmachung des Hinweises auf die Patenterteilung: **22.04.2020**
(21) Anmeldenummer: 15720041.1
(22) Anmeldetag: 24.04.2015
(51) Int. Cl.: F16C 19/22, F16C 33/50, F16C 33/46, F16C 19/40, F16C 33/51, F16C 19/20

(54) **WÄLZLAGER**
ROLLING BEARING
PALIER À ROULEMENT

(30) Priorität: 25.04.2014 DE 102014207836
(43) Veröffentlichungstag der Anmeldung: 01.03.2017
(73) Patentinhaber: Aktiebolaget SKF, 415 50 Göteborg (SE)
(72) Erfinder: HOFMANN, Sabine, 97072 Würzburg (DE); LIANG, Baozhu, 97456 Hambach (DE)
(74) Vertreter: Kuhstrebe, Jochen
(86) Internationale Anmeldenummer: PCT/EP2015/058946
(87) Internationale Veröffentlichungsnummer: WO 2015/162262

(56) Entgegenhaltungen:
- WO-A1-2011/031931
- DE-A1-102011 004 374
- DE-A1-102011 089 078
- DE-B- 1 228 110
- GB-A- 1 162 570
- GB-A- 1 296 976
- KR-A- 20120 055 875
- US-A1- 2013 118 851

## Beschreibung

Die Erfindung betrifft ein Wälzlager mit mindestens einem Innenring und mindestens einem Außenring, wobei zwischen den Lagerringen eine Anzahl Wälzkörper angeordnet sind, wobei die Wälzkörper durch einen Käfig gehalten werden, wobei der Käfig aus einer Anzahl Käfigsegmenten besteht, wobei jedes Käfigsegment zwei Wälzkörper an mindestens zwei vorzugsweise der Form des Wälzkörpers angepassten Kontaktflächen berührt, wobei an jedem Käfigsegment mindestens ein Befestigungselement angeordnet ist und wobei die Käfigsegmente über ein Kopplungselement zumindest zeitweise verbindbar sind, wozu das Kopplungselement mit den Befestigungselementen in Eingriff gebracht wird.

Ein gattungsgemäßes Wälzlager ist aus der DE 10 2011 004 374 A1 bekannt. Der Käfig ist hier nicht als einstückiges Bauteil ausgeführt, sondern er besteht aus einer Anzahl Käfigsegmenten (auch als Käfigspacer bezeichnet), die über ein drahtförmiges Verbindungselement, das in Umfangsrichtung umläuft, miteinander verbunden sind. Eine ähnliche Lösung, bei der der Käfig aus einer Anzahl Käfigsegmenten besteht, offenbart die GB 1 162 570 A.

Die Ausgestaltung des Käfigs in Form von Segmenten hat den Vorteil, dass eine besonders gute Eignung für große (Kegel)Rollenlager besteht und die hier auftretenden Belastungen besonders gut aufgenommen werden können. Des Weiteren können die einzelnen Käfigsegmente gut montiert werden; gleichzeitig kann ein geringes Käfiggewicht erreicht werden. Die Ausbildung der Käfigsegmente ermöglicht eine sichere Aufnahme des Wälzkörpers und eine zuverlässige Führung des Käfigsegments am Wälzkörper. Die Käfigsegmente kommen dabei bei bestimmungsgemäßer Benutzung nicht in Berührung; sie sind nicht miteinander verbunden.

Nachteilig ist es bei den vorbekannten Ausgestaltungen des Käfigs mittels Käfigsegmenten, dass unter bestimmten Anwendungsbedingungen eine freie Rollbewegung der Wälzkörper verhindert wird, wenn nämlich die Käfigsegmente die Wälzkörper unter speziellen Betriebsbedingungen des Lagers stark zusammenpressen. Zunächst ist stets vorgesehen, dass es im Wälzlager ein definiertes Käfigspiel in Umfangsrichtung gibt, das das Abrollen der Wälzkörper ermöglicht. Allerdings kann es bei bestimmten Betriebsbedingungen dazu kommen, dass sich alle Wälzkörper und Käfigspacer zusammen schieben und somit das freie Abrollen der Wälzkörper erschwert wird bzw. nicht möglich ist.

Der Erfindung liegt die **Aufgabe** zugrunde, ein gattungsgemäßes Lager so fortzubilden, dass dieser Nachteil eliminiert wird, d. h. es soll dafür Sorge getragen werden, dass ein Einklemmen der Wälzkörper in jedem Falle verhindert wird.

Die **Lösung** dieser Aufgabe durch die Erfindung ist dadurch gekennzeichnet, dass jedes Käfigsegment in zumindest einem axialen Endbereich eine die Stirnseite des Wälzkörpers teilweise abdeckende Seitenplatte aufweist, wobei sich zwei in Umfangsrichtung aufeinander folgende Seitenplatten zweier benachbarter Käfigsegmente an zueinander komplementär ausgeformten Kontaktflächen kontaktieren können.

Eine der zueinander komplementär ausgeformten Kontaktflächen weist dabei eine konvexe Form auf, während die andere der Kontaktflächen eine konkave Form hat. Die konvexe Form hat dabei eine stärkere Krümmung als die konkave Form. Dabei ist vorgesehen, dass jede Seitenplatte des Käfigsegments in dem einen in Umfangsrichtung liegenden Endbereich eine Kontaktfläche mit konvexer Form und in dem anderen in Umfangsrichtung liegenden Endbereich eine Kontaktfläche mit konkaver Form aufweist.

Die Kontaktflächen liegen im Bereich der Achse des Wälzkörpers.

Das Kopplungselement ist zumeist ein Zugkräfte übertragendes, aber weitgehend biegeschlaffes Bauteil. Es handelt sich hierbei bevorzugt um ein Seil.

Das mindestens eine Befestigungselement kann als Öse ausgebildet sein, durch die das Kopplungselement hindurch gefädelt werden kann, wobei das mindestens eine Befestigungselement bevorzugt einstückig am Käfigsegment angeformt ist.

Eine Alternative sieht vor, dass die Befestigungselemente als jeweils zwei zusammenwirkende hakenförmige Elemente ausgebildet sind, die das Kopplungselement an sich gegenüberliegenden Umfangsabschnitten greifen.

Das Käfigsegment ist bevorzugt als einstückiges Bauteil ausgebildet.

Das Käfigsegment kann schließlich mindestens eine Anlauffläche zum Anlauf an einer Schulter oder einem Bord eines Lagerrings aufweisen, wodurch eine Schulterführung möglich ist.

Die beiden zusammenwirkenden Endbereiche der benachbarten Seitenplatten der Käfigsegmente können gerade oder mit einer bestimmten Geometrie (konkave und konvexe Paarung) ausgeführt werden; in letztem Falle kann an den Enden der Seitenplatten die Geometrie in komplementärer negativer und korrespondierender positiver Form ausgeführt werden.

Mittels dieser verlängerten Seitenplatten (Seitenelemente), die einander abstützen, kann das Käfigspiel zwischen den Käfigsegmenten und den Wälzkörpern gezielt so eingestellt und bestimmt werden, dass der Wälzkörper genügend Freiraum zum Abrollen hat, da sich im Fall des Zusammenschiebens aller Wälzkörper, zuerst die Kontaktflächen der Seitenplatten berühren, bevor die Wälzkörper mit ihrem Steg in Kontakt kommen.

Zudem können sich die Käfigsegmente auf der Innenring-Schulter abstützen, d. h. in diesem Falle sind sie schultergeführt. Durch das vorgesehene Verbindungselement (Seil) bilden die Seitenplatten (Seitenelemente) und die Stege einen untrennbaren und freien Raum für den Wälzkörper. Die Paarung der negativen und positiven Endform der Seitenelemente erlaubt die notenwendige, freie und relative (Kipp)Bewegung zweier benachbarter und in Kontakt tretender Seitenplatten in der Lageranwendung.

Durch die Verlängerung der Seitenplatten an den Käfigsegmenten treten die Seitenplatten (mit ihrer positiven und negativen komplementären Geometrieausführung) in Kontakt, anstatt dass die Wälzkörper mit dem Steg in Kontakt treten. Dies führt dazu, dass das freie Abrollen der Wälzkörper sichergestellt werden kann.

Die beiden axial endseitig angeordneten Seitenplatten sind dabei vorzugsweise mit einem Steg in Form eines Trägerelements (Verbindungsbalken) miteinander verbunden, wobei am Trägerelement mindestens ein Führungselement angeordnet ist, das eine der Form des Wälzkörpers angepasste Kontaktfläche aufweist.

Das Wälzlager ist insbesondere ein Rollenlager, vorzugsweise ein Kegelrollenlager, ein Zylinderrollenlager oder ein Pendelrollenlager.

Wie eingangs gesagt, berührt jedes Käfigsegment zwei Wälzkörper an mindestens zwei vorzugsweise der Form des Wälzkörpers angepassten Kontaktflächen. Zumeist besteht diese Anpassung darin, dass die Kontaktflächen kongruent zur Form des Wälzkörpers ausgebildet sind. Allerdings wäre generell auch beispielsweise eine lediglich hakenförmige Ausgestaltung der Kontaktflächen möglich, um den Wälzkörper in Position zu halten.

Eine Weiterbildung sieht vor, dass an oder auf dem Kopplungselement mindestens ein Abstandselement angeordnet ist. Mit diesem kann die relative Beweglichkeit zwischen dem Kopplungselement und mindestens einem Befestigungselement in Umfangsrichtung begrenzt werden. Additiv oder alternativ dient das Abstandselement auch dazu, den Abstand zwischen zwei benachbarten Käfigsegmenten konstant zu halten. Demgemäß sind also Abstandselemente vorgesehen, die auf dem Seil aufgezogen und zwischen zwei Käfigsegmenten angeordnet sind, um die Käfigsegmente in Umfangsrichtung auf einem definierten Abstand zu halten. Die Bewegungsmöglichkeit der einzelnen Käfigsegmente relativ zueinander und in Umfangsrichtung kann so definiert bzw. eingestellt werden.

Die Käfigsegmente stellen Abstandshalter zwischen zwei Wälzkörpern dar. Die Käfigsegmente (Käfig-Spacer) dienen somit lediglich als Trennelemente zwischen den Wälzkörpern. Die Käfigsegmente werden abwechselnd mit den Wälzkörpern im Lager verbaut; demgemäß entspricht die Anzahl der Käfigsegmente derjenigen der Wälzkörper.

Durch das vorgesehene Kopplungselement (Seil) entsteht ein verliersicherer Verbund zwischen Wälzkörpern und Käfig auf dem Innenring.

Durch den Einsatz einzelner separater Käfigsegmente wird die Flexibilität des Rollenkäfigverbunds vorteilhaft erhöht. Mit der vorgeschlagenen Lösung wird also der Grad der Flexibilität des Käfigsystems weiter erhöht.

Ferner ist es möglich, die Kosten zu reduzieren, da Spritzgießwerkzeuge eingesetzt werden können, die einen kleineren Bauraum benötigen als bei vorbekannten Lösungen.

Die erfindungsgemäße Ausgestaltung bietet die Möglichkeit, das Lager für den Einbau zu zerlegen, d. h. im Falle von Kegelrollenlagern den Innenring plus Rollensatz vom Außenring zu trennen, ohne dass die Lagerkomponenten auseinanderfallen. Die Käfigsegmente sind also selbsthaltend.

Das Seil kann dabei nur solange eingebaut bleiben, bis die endgültige Montage des Lagers durchgeführt wird; es kann dann entfernt werden, weil es für den Betrieb des Lagers nicht benötigt wird. Es kann aber auch genauso vorgesehen werden, dass das Seil permanent montiert bleibt.

Das Seil als Kopplungselement ist bevorzugt, allerdings sind auch andere Lösungen denkbar, beispielsweise eine Schraubverbindung, die zwischen zwei benachbarten Käfigsegmenten wirksam angeordnet ist.

Damit kann in vorteilhafter Weise durch das Anbringen des Kopplungselements (Seil) an den Befestigungselementen der aus Segmenten bestehende Käfig samt Rollen mit dem Lagerinnenring unverlierbar verbunden und separat zum Außenring in die Anwendung eingebaut werden. Der Einbau des Lagers wird entsprechend einfacher.

In der Zeichnung sind Ausführungsbeispiele der Erfindung dargestellt. Es zeigen:
- Fig. 1: in perspektivischer Darstellung einen Ausschnitt eines Kegelrollenlagers, dargestellt ohne Lageraußenring,
- Fig. 2: in perspektivischer Darstellung einen vergrößerten Ausschnitt des Kegelrollenlagers nach Fig. 1, wobei nur ein Käfigabschnitt, bestehend aus drei Käfigsegmenten, mit zugehörigen Wälzkörpern dargestellt ist,
- Fig. 3: einen Radialschnitt durch das Kegelrollenlager ohne Lageraußenring und
- Fig. 4: eine zu Fig. 3 geringfügig modifizierte Ausführungsform.

In den Figuren ist für die Anwendung in einem Kegelrollenlager das erfindungsgemäße Konzept illustriert.

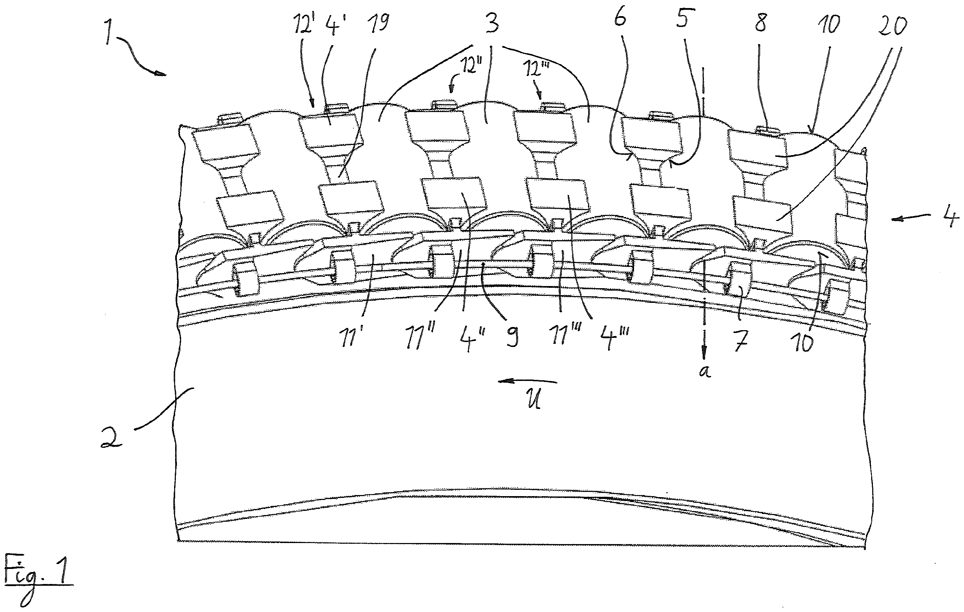

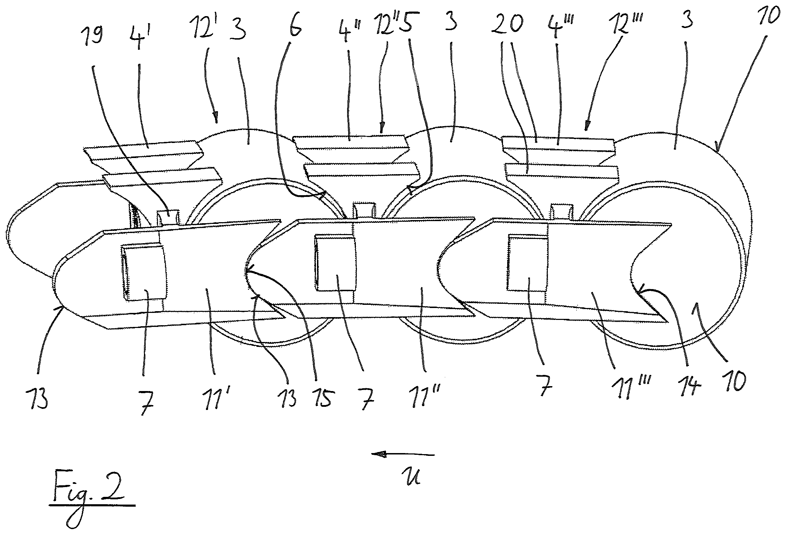

In Fig. 1 ist ein Wälzlager 1 in Form eines Kegelrollenlagers zu sehen, wobei der Innenring 2 und der Käfig 4 zu erkennen sind; mit dem Käfig 4 werden Wälzkörper 3 (Kegelrollen) gehalten. Jede Kegelrolle 3 hat eine Achse a. Der Käfig 4 besteht aus einer Anzahl in Umfangsrichtung U aufeinander folgend angeordneten Käfigsegmenten 4', 4", 4"'. Die Ausgestaltung der Käfigsegmente 4', 4", 4'" geht am besten aus Fig. 2 hervor.

Jedes Käfigsegment 4', 4", 4"' hat einen Steg 19, der im Ausführungsbeispiel zwei Führungselemente 20 aufweist. Jedes Führungselement hat eine Kontaktfläche 5 und eine Kontaktfläche 6, die jeweilige kongruente Anlaufflächen für die Wälzkörper 3 bilden und diese somit führen. In den beiden axialen Endbereichen der Stege 19 ist je eine Seitenplatte 11', 11", 11"' bzw. 12', 12", 12"' angeordnet. Die Seitenplatten bilden Anlaufflächen für die Stirnseiten 10 der Wälzkörper 3.

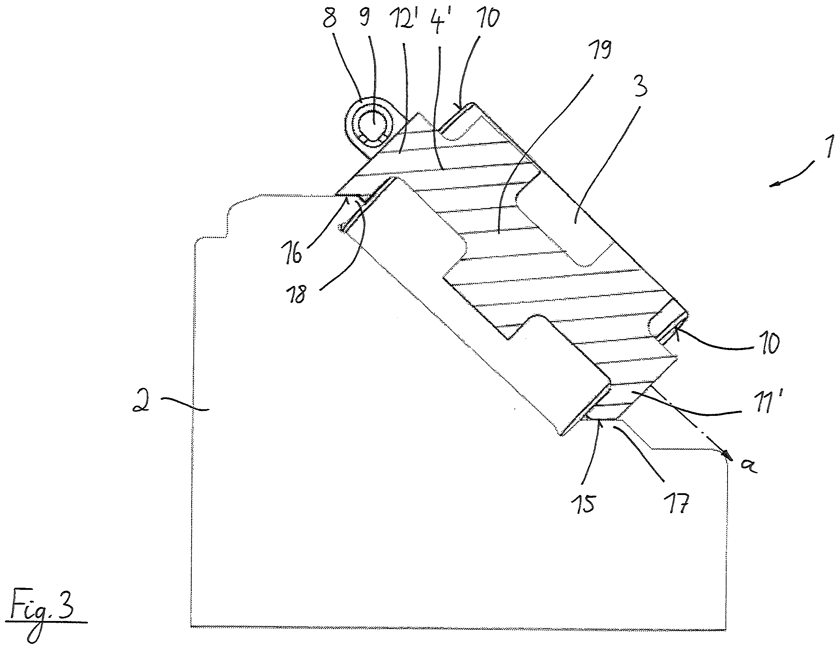

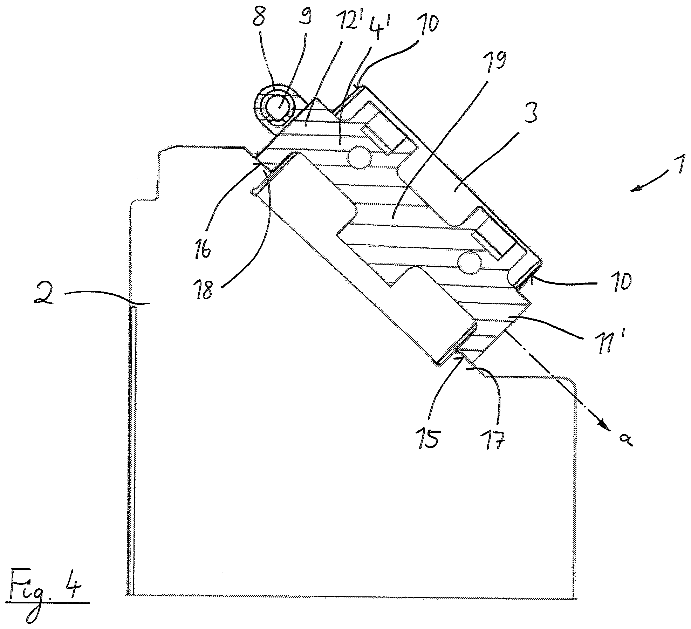

An den Seitenplatten 11', 11", 11"' und/oder 12', 12", 12"' sind im axial außenliegenden Bereich Befestigungselemente 7 bzw. 8 angeformt, und zwar als Ösen, durch die ein Kopplungselement 9 in Form eines Seils geführt werden kann (s. Fig. 1), um die Gesamtheit der Käfigsegmente 4', 4", 4"' zusammenzuhalten. Aufgrund der Borde 17 und 18 des Innenrings 2 (s. hierzu Fig. 3 und Fig. 4) ergibt sich somit ein unverlierbarer Verbund von Innenring, Wälzkörpern und Käfig.

Wesentlich ist, dass jedes Käfigsegment 4', 4", 4'" in seinen beiden axialen Endbereichen jeweils eines die Stirnseite 10 des Wälzkörpers 3 teilweise abdeckende Seitenplatte 11', 11", 11"' bzw. 12', 12", 12"' aufweist, wobei sich - s. hierzu am besten Fig. 2 - zwei in Umfangsrichtung U aufeinander folgende Seitenplatten 11', 11", 11"' bzw. 12', 12", 12"' zweier benachbarter Käfigsegmente 4', 4", 4'" an zueinander komplementär ausgeformten Kontaktflächen 13 und 14 kontaktieren können.

Die eine Kontaktfläche 13 ist dabei konvex ausgeführt, die andere Kontaktfläche 14 in weitgehend kongruenter Weise konkav, so dass in Umfangsrichtung U gesehen ein in Fig. 2 linkes Ende in ein korrespondierendes rechtes Ende eintreten kann. Die konvexe Ausgestaltung ist dabei etwas stärker gekrümmt als die konkave Ausformung, was in Fig. 2 an der Kontaktsituation zweier Seitenplatten 11 gesehen werden kann.

Hiermit ist es nicht mehr möglich, dass durch einen zu großen Zug im Seil 9 bzw. durch entsprechende Lastzustände im Wälzlager Wälzkörper 3 und Käfigsegmente 4', 4", 4'" zu stark in Umfangsrichtung U zusammengeschoben werden können, so dass ein Klemmen der Wälzkörper 3 verhindert wird.

Die bevorzugt vorgesehene Schulterführung des Käfigs 4 ist in den Figuren 3 und 4 dargestellt. Jedes Käfigsegment 4', 4", 4'" hat hiernach eine im radial innenliegenden Endbereich vorgesehene Kontaktfläche Anlauffläche 15 bzw. 16, die ausgeführt ist, um an einer korrespondierenden Außenfläche des Bordes 17 bzw. 18 anzulaufen.

### Bezugszeichenliste

- 1: Wälzlager
- 2: Innenring
- 3: Wälzkörper
- 4: Käfig
- 4': Käfigsegment
- 4": Käfigsegment
- 4"': Käfigsegment
- 5: Kontaktfläche
- 6: Kontaktfläche
- 7: Befestigungselement
- 8: Befestigungselement
- 9: Kopplungselement (Seil)
- 10: Stirnseite des Wälzkörpers
- 11': Seitenplatte
- 11": Seitenplatte
- 11"': Seitenplatte
- 12': Seitenplatte
- 12": Seitenplatte
- 12"': Seitenplatte
- 13: Kontaktfläche
- 14: Kontaktfläche
- 15: Anlauffläche
- 16: Anlauffläche
- 17: Schulter / Bord
- 18: Schulter / Bord
- 19: Steg
- 20: Führungselement

- U: Umfangsrichtung
- a: Achse des Wälzkörpers

## Patentansprüche

1. Wälzlager (1) mit mindestens einem Innenring (2) und mindestens einem Außenring, wobei zwischen den Lagerringen eine Anzahl Wälzkörper (3) angeordnet sind, wobei die Wälzkörper (3) durch einen Käfig (4) gehalten werden, wobei der Käfig aus einer Anzahl Käfigsegmenten (4', 4", 4''') besteht, wobei jedes Käfigsegment (4', 4", 4''') zwei Wälzkörper (3) an mindestens zwei vorzugsweise der Form des Wälzkörpers (3) angepassten Kontaktflächen (5, 6) berührt, wobei an jedem Käfigsegment (4', 4", 4''') mindestens ein Befestigungselement (7, 8) angeordnet ist und wobei die Käfigsegmente (4', 4", 4''') über ein Kopplungselement (9) zumindest zeitweise verbindbar sind, wozu das Kopplungselement (9) mit den Befestigungselementen (7, 8) in Eingriff gebracht wird,
wobei jedes Käfigsegment (4', 4", 4''') in zumindest einem axialen Endbereich eine die Stirnseite (10) des Wälzkörpers (3) teilweise abdeckende Seitenplatte (11', 11", 11'''; 12', 12", 12'") aufweist, wobei sich zwei in Umfangsrichtung (U) aufeinander folgende Seitenplatten (11', 11", 11"'; 12', 12", 12'") zweier benachbarter Käfigsegmente (4', 4", 4''') an zueinander komplementär ausgeformten Kontaktflächen (13, 14) kontaktieren können, wobei eine der zueinander komplementär ausgeformten Kontaktflächen (13) eine konvexe Form aufweist und die andere der Kontaktflächen (14) eine konkave Form aufweist, wobei jede Seitenplatte (11', 11'', 11"'; 12', 12", 12'") des Käfigsegments (4', 4", 4''') in dem einen in Umfangsrichtung (U) liegenden Endbereich eine Kontaktfläche (13) mit konvexer Form und in dem anderen in Umfangsrichtung (U) liegenden Endbereich eine Kontaktfläche (14) mit konkaver Form (14) aufweist, wobei die Kontaktflächen (13, 14) im Bereich der Achse (a) des Wälzkörpers (3) liegen, **dadurch gekennzeichnet, dass** die konvexe Form eine stärkere Krümmung aufweist als die konkave Form.

2. Wälzlager nach Anspruch 1 oder 2, **dadurch gekennzeichnet, dass** das Kopplungselement (9) ein Zugkräfte übertragendes, aber weitgehend biegeschlaffes Bauteil ist.

3. Wälzlager nach Anspruch 3, **dadurch gekennzeichnet, dass** das Kopplungselement (9) ein Seil ist.

4. Wälzlager nach einem der Ansprüche 1 bis 4, **dadurch gekennzeichnet, dass** das mindestens eine Befestigungselement (7, 8) als Öse ausgebildet ist, durch die das Kopplungselement (9) hindurch gefädelt werden kann, wobei das mindestens eine Befestigungselement (7, 8) bevorzugt einstückig am Käfigsegment (4', 4", 4"') angeformt ist.

5. Wälzlager nach einem der Ansprüche 1 bis 5, **dadurch gekennzeichnet, dass** das Käfigsegment (4', 4", 4"') als einstückiges Bauteil ausgebildet ist.

6. Wälzlager nach einem der Ansprüche 1 bis 6, **dadurch gekennzeichnet, dass** das Käfigsegment (4', 4", 4''') mindestens eine Anlauffläche (15, 16) zum Anlauf an einer Schulter oder einem Bord (17, 18) eines Lagerrings (2) aufweist.

## Claims

1. Rolling bearing (1) having at least one inner ring (2) and at least one outer ring, wherein a number of rolling elements (3) are arranged between the bearing rings, wherein the rolling elements (3) are held by a cage (4), wherein the cage consists of a number of cage segments (4', 4", 4"'), wherein each cage segment (4', 4", 4"') touches two rolling elements (3) at at least two contact faces (5, 6) adapted preferably to the shape of the rolling element (3), wherein at least one fastening element (7, 8) is arranged on each cage segment (4', 4", 4"') and wherein the cage segments (4', 4", 4"') are able to be connected at least temporarily via a coupling element (9), for which purpose the coupling element (9) is brought into engagement with the fastening elements (7, 8), wherein each cage segment (4', 4", 4"') has, in at least one axial end region, a side plate (11', 11", 11'''; 12', 12", 12"') that partially covers the end side (10) of the rolling element (3), wherein two side plates (11', 11", 11"'; 12', 12", 12"') that follow one another in the circumferential direction (U) can contact two adjacent cage segments (4', 4", 4"') at contact faces (13, 14) formed in a complementary manner to one another, wherein one of the contact faces (13) that are formed in a complementary manner to one another has a convex shape and the other of the contact faces (14) has a concave shape, wherein each side plate (11', 11", 11"'; 12', 12", 12"') of the cage segment (4', 4", 4"') has a contact face (13) with a convex shape in one end region located in the circumferential direction (U) and a contact face (14) with a concave shape (14) in the other end region located in the circumferential direction (U), wherein the contact faces (13, 14) are located in the region of the axis (a) of the rolling element (3), **characterized in that** the convex shape is more strongly curved than the concave shape.

2. Rolling bearing according to Claim 1 or 2, **characterized in that** the coupling element (9) is a component that transmits tensile forces but is largely flexible.

3. Rolling bearing according to Claim 3, **characterized in that** the coupling element (9) is a cable.

4. Rolling bearing according to one of Claims 1 to 4, **characterized in that** the at least one fastening element (7, 8) is configured as an eye, through which the coupling element (9) can be threaded, wherein the at least one fastening element (7, 8) is formed preferably integrally on the cage segment (4', 4", 4"').

5. Rolling bearing according to one of Claims 1 to 5, **characterized in that** the cage segment (4', 4", 4"') is configured as an integral component.

6. Rolling bearing according to one of Claims 1 to 6, **characterized in that** the cage segment (4', 4", 4"') has at least one run-on face (15, 16) for running on a shoulder or an edge (17, 18) of a bearing ring (2).

## Revendications

1. Palier à roulement (1) comprenant au moins une bague intérieure (2) et au moins une bague extérieure, une pluralité de corps de roulement (3) étant disposés entre les bagues de palier, les corps de roulement (3) étant retenus par une cage (4), la cage se composant d'une pluralité de segments de cage (4', 4", 4"'), chaque segment de cage (4', 4", 4"') venant en contact avec deux corps de roulement (3) au niveau d'au moins deux surfaces de contact (5, 6) adaptées de préférence à la forme du corps de roulement (3), au moins un élément de fixation (7, 8) étant disposé au niveau de chaque segment de cage (4', 4", 4''') et les segments de cage (4', 4", 4"') pouvant être connectés au moins temporairement par le biais d'un élément d'accouplement (9), ce pourquoi l'élément d'accouplement (9) est amené en prise avec les éléments de fixation (7, 8), chaque segment de cage (4', 4", 4"') présentant, dans au moins une région d'extrémité axiale, une plaque latérale (11', 11'', 11''' ; 12', 12", 12"') recouvrant en partie le côté frontal (10) du corps de roulement (3), deux plaques latérales (11', 11", 11''' ; 12', 12'', 12"') successives dans la direction périphérique (U) de deux segments de cage adjacents (4', 4", 4"') pouvant venir en contact au niveau de surfaces de contact (13, 14) de formes complémentaires l'une à l'autre, l'une des surfaces de contact (13) réalisée de manière complémentaire à l'autre présentant une forme convexe et l'autre des surfaces de contact (14) présentant une forme concave, chaque plaque latérale (11', 11'', 11''' ; 12', 12", 12"') du segment de cage (4', 4", 4"') dans l'une des régions d'extrémité située dans la direction périphérique (U) présentant une surface de contact (13) de forme convexe et dans l'autre des régions d'extrémité située dans la direction périphérique (U) présentant une surface de contact (14) de forme concave (14), les surfaces de contact (13, 14) étant situées dans la région de l'axe (a) du corps de roulement (3), **caractérisé en ce que** la forme convexe présente une plus forte courbure que la forme concave.

2. Palier à roulement selon la revendication 1 ou 2, **caractérisé en ce que** l'élément d'accouplement (9) est un composant transférant les forces de traction, mais essentiellement flexible.

3. Palier à roulement selon la revendication 3, **caractérisé en ce que** l'élément d'accouplement (9) est un câble.

4. Palier à roulement selon l'une quelconque des revendications 1 à 4, **caractérisé en ce que** l'au moins un élément de fixation (7, 8) est réalisé sous forme d'œillet à travers lequel l'élément d'accouplement (9) peut être enfilé, l'au moins un élément de fixation (7, 8) étant de préférence façonné d'une seule pièce sur l'élément de cage (4', 4" 4"').

5. Palier à roulement selon l'une quelconque des revendications 1 à 5, **caractérisé en ce que** le segment de cage (4', 4", 4"') est réalisé sous forme de composant d'une seule pièce.

6. Palier à roulement selon l'une quelconque des revendications 1 à 6, **caractérisé en ce que** le segment de cage (4', 4", 4"') présente au moins une surface de montée (15 16) pour monter sur un épaulement ou un bord (17, 18) d'une bague de palier (2).
